# EUROPEAN PATENT APPLICATION

(11) **EP 1 404 103 A2**
(43) Date of publication of application: **31.03.2004**
(21) Application number: 03016507.0
(22) Date of filing: 21.07.2003
(51) Int. Cl.: H04N 1/00

(54) **Image printing system using cellular phone with camera**

(30) Priority: 27.09.2002 JP 2002283086
(71) Applicant: Nec Mobiling, Ltd., Yokohama-shi, Kanagawa (JP)
(72) Inventor: Morishita, Yusaku, Nec Mobiling, Ltd., Yokohama-shi, Kanagawa (JP)
(74) Representative: VOSSIUS & PARTNER

(57) **Abstract**

An image printing system using a cellular phone with camera, which offers useful services for a user who possesses a cellular phone with camera but does not have means for easily printing out images taken by the cellular phone. The image printing system using a cellular phone with camera includes a means for connecting a cellular phone with camera to a portrait seal printing machine. Image data of an image taken by the cellular phone with camera is fed into the portrait seal printing machine, and the portrait seal printing machine produces and prints out portrait seals based on the image data,

## Description

The present invention relates to an image printing system using a cellular phone with camera.

With the remarkable increase of cellular phone use, the functions of the cellular phone have been enhanced. Accordingly, a cellular phone with camera, which is capable of taking pictures or images in addition to making a call, has come into widespread use.

Users can take pictures and obtain image data by the use of the cellular phone with camera. However, there are a limited proportion of users who possess information processing equipment such as a PC (personal computer) for making it possible to print out the image data and a printer for actually printing the pictures.

Consequently, many users of the cellular phone with camera can only e-mail the obtained image data or see the image on the display of the cellular phone.

On the other hand, an instant photo machine to make tiny stickers or self-portrait seals called "purikura" (proprietary product name) gains wide popularity.

JP-A-2000-115666 (page 2, Fig. 1) discloses a system for producing such portrait seals in a place distant from the instant photo machine through the Internet.

As described above, in the present circumstances, for all the popularity of the cellular phone with camera, many of users do not have means for easily printing out images taken by their cellular phones.

Besides, although there is known the system for operating the instant photo machine that does easy printing of images by remote control, the system cannot be used for other purposes.

Additionally, images have a large amount of data as compared to text. Therefore, as images taken by the cellular phone with camera increase, image data could exceed the memory capacity of the cellular phone. This is especially so given that the cellular phone is required to be small and compact.

It is therefore an object of the present invention to provide an image printing system using a cellular phone with camera, which offers useful services to a user who possesses the cellular phone with camera but does not have a means for printing out images taken by the cellular phone.

In accordance with the present invention, to achieve the above object, there is provided an image printing system using a cellular phone with camera including a means for connecting a cellular phone with camera to an portrait seal printing machine, characterized in that image data of images taken by the cellular phone with camera is passed to the portrait seal printing machine, and the portrait seal printing machine produces and prints out portrait seals or stickers based on the image data.

The image printing system using a cellular phone with camera may be a system that offers unattended portrait seal selling service, in which a user of the cellular phone with camera pays a fee, image data of images taken by the cellular phone with camera is passed to the portrait seal printing machine, and the user operates the portrait seal printing machine to print out portrait seals.

In this case, the user may utilize points instead of cash to enjoy the service. For example, a user gets some points as a reward for purchasing goods or a product from a supplier or at a store affiliated with a point system, and he/ she can utilize the obtained points to use the portrait seal printing machine.

Further, the image printing system using a cellular phone with camera may include an image data storage. In this instance, when a user sends image data from the portrait seal printing machine to the image data storage via a network, other users can view the image data stored in the storage by accessing the network through terminals or cellular phones.

Still further, the image printing system using a cellular phone with camera may include a maintenance control terminal for the maintenance of the portrait seal printing machine. The maintenance control terminal is capable of operating the portrait seal printing machine by remote control through a network to manage the upgrading of a version of software, power ON/ OFF setting, and failure detection for the printing machine.

The objects and features of the present invention will become more apparent from the consideration of the following detailed description taken in conjunction with the accompanying drawings in which:
Fig. 1 is a block diagram showing the configuration of an image printing system using a cellular phone with camera according to the first embodiment of the present invention;
Fig. 2 is a chart showing an example of the operation of the image printing system using a cellular phone with camera depicted in Fig. 1;
Fig. 3 is a schematic view of a portrait seal printing machine depicted in Fig. 1;
Fig. 4 is a chart showing another example of the operation of the image printing system using a cellular phone with camera depicted in Fig. 1;
Fig. 5 is a chart showing yet another example of the operation of the image printing system using a cellular phone with camera depicted in Fig. 1;
Fig. 6 is a block diagram showing the configuration of an image printing system using a cellular phone with camera according to the second embodiment of the present invention;
Fig. 7 is a correlation diagram of point use showing the flow of points in the image printing system using a cellular phone with camera depicted in Fig. 6;
Fig. 8 is a chart showing an example of the operation of the image printing system using a cellular phone with camera depicted in Fig. 6 for receiving its service with points;
Fig. 9 is a chart showing another example of the operation of the image printing system using a cellular phone with camera depicted in Fig. 6 for receiving its service in cash or through a subscription cashless system; and
Fig. 10 is a block diagram showing an example of corporate structure with an image printing system using a cellular phone with camera of the present invention.

Referring now to the drawings, a description of preferred embodiments of the present invention will be given in detail.

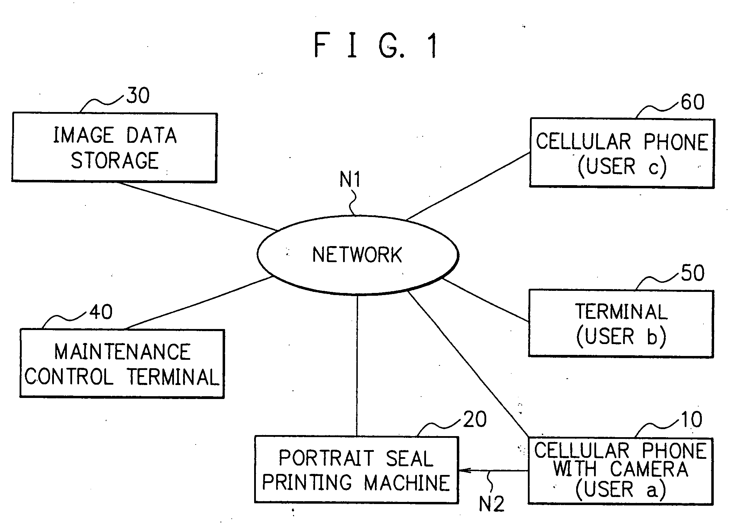

Fig. 1 is a block diagram showing the configuration of an image printing system using a cellular phone with camera according to the first embodiment of the present invention. Referring to Fig. 1, the image printing system using a cellular phone with camera comprises a cellular phone with camera 10 of a user a, a portrait seal printing (vending) machine 20, an image data storage 30, a maintenance control terminal 40, a terminal 50 of a user b, a cellular phone 60 of a user c, and a network N1.

The cellular phone with camera 10 is provided with a data sending means N2 for sending image data to the portrait seal printing machine 20. Examples of the data sending means N2 include, for example, wireless communication such as the infrared data communication (IrDC) and BlueTooth, a storage medium such as a memory stick and SD (Secure Digital) memory card, or cable connection for carrying serial signals prescribed by cellular phone carriers.

The portrait seal printing machine 20 is provided with a means for receiving image data from the cellular phone with camera 10 through, for example, wireless communication such as the infrared data communication (IrDC) and BlueTooth, a storage medium such as a memory stick and SD (Secure Digital) memory card, or cable connection for sending down serial signals prescribed by cellular phone carriers.

In addition, the portrait seal printing machine 20 has several functions such as a trimming function for trimming a desired image, a drawing function for drawing a design in the image, a screen separation function for making a screen separation, a print out function for printing and outputting portrait seals or stickers, and an access function for accessing to the network N1. Besides, the portrait seal printing machine 20 includes a touch panel that is used by a user for performing the above-mentioned functions, and a fee collection unit into which each user drop a fee to use the portrait seal printing machine 20.

The image data storage 30 is configured with information processing equipment such as a workstation server. The image data storage 30 includes a function for storing/ managing image data sent via the network N1 with respect to each user and a function for notifying each user of a logical storage position. When a user makes a request for the download of an image, the image data storage 30 accommodates the request.

The maintenance control terminal 40 can carry out the maintenance of the image data storage 30 via the network N1. The maintenance control terminal 40 is information processing equipment such as a workstation server.

The maintenance control terminal 40 can operate the portrait seal printing machine 20 by remote control through the network N1 for counting up the number of prints and the sales; switching on/ off the power setting, upgrading a version of software installed therein, and the like. The maintenance control terminal 40 also monitors the portrait seal printing machine 20 for failures.

In like fashion, the maintenance control terminal 40 can remotely control the storage/ management of image data with respect to each user, failure detection, power on/ off setting, upgrading of a version of software, etc. in the image data storage 30 through the network N1.

The terminal 50 is information processing equipment such as a PC (personal computer) or a PDA (personal digital assistance) connected to the network N1.

When the user b performs the predetermined procedure, the terminal 50 gains access to the image data storage 30 via the network N1, thus enabling the download of image data, for example, images of the user a, stored therein.

The cellular phone 60 is a mobile telephone provided with a display, which is connected to the network N1.

When the user c takes the required steps, the cellular phone 60 gains access to the image data storage 30 via the network N1, thus enabling the download of image data, for example, images of the user a, stored therein.

The network N1 is communication lines that employ communications protocols for the Internet. The network N1 includes every wireless and fixed-line. For example, the portrait seal printing machine 20, the cellular phone with camera 10, the terminal 50 (PC, PDA, etc.) and the cellular phone 60 carry out wireless communication through wireless lines run by communication carriers or cellular phone carriers, while the image data storage 30 and the maintenance control terminal 40 are provided with fixed-lines.

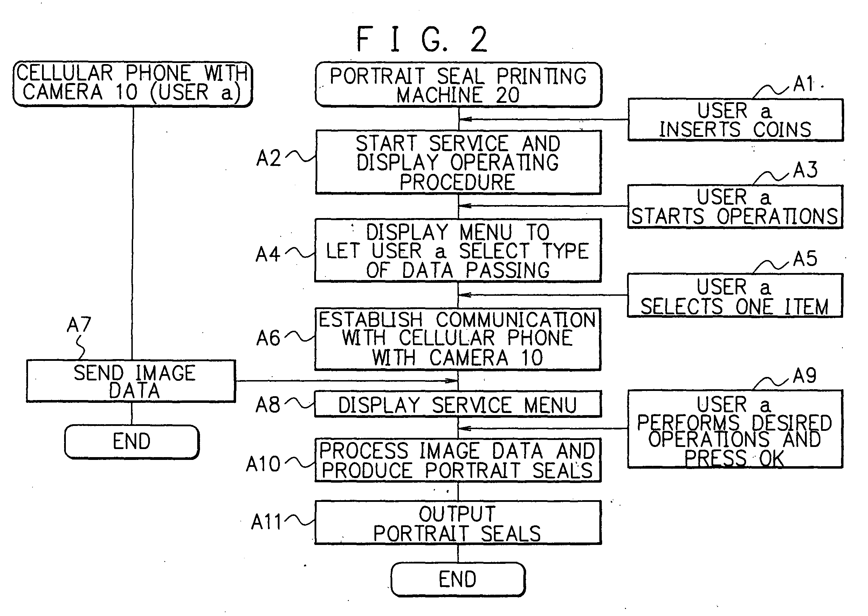

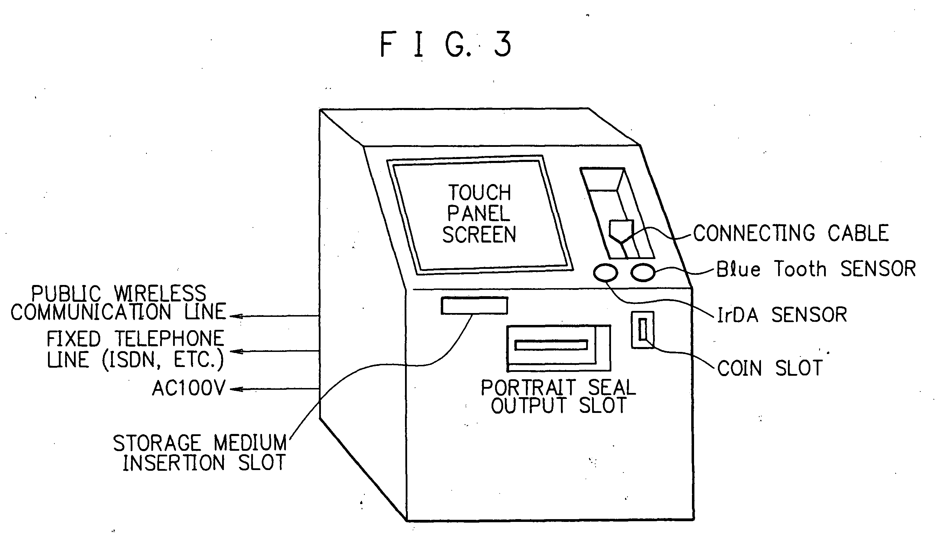

In the following, a detailed description will be given of an example of the operation of the image printing system using a cellular phone with camera according to the first embodiment. Fig. 2 is a chart showing an example of the operation of the image printing system using a cellular phone with camera depicted in Fig. 1. Fig. 3 is a schematic view of the portrait seal printing machine 20 depicted in Fig. 1.

Referring to Fig. 2, for a start the user a who uses the cellular phone with camera 10 inserts coins for an amount commensurate with a fee for the service of the system into a coin slot (see Fig. 3) of the portrait seal printing machine 20 (step A1).

When coins equivalent to a prescribed fee are dropped into the coin slot, the portrait seal printing machine 20 indicates on a touch panel screen (see Fig. 3) the start of the service and the operating procedure (step A2). The user a starts operations in reference to guidance or instructions displayed on the touch panel screen (step A3).

First, the portrait seal printing machine 20 displays instructions on haw to send image data from the cellular phone with camera 10 to the printing machine 20 on the touch panel screen. At this time, a menu appears on the touch panel screen, and the user a selects the type of data passing to feed the portrait seal printing machine 20 with image data (step A4). Items on the menu include, for example, wireless communications such as the infrared data communication (IrDC) and BlueTooth, storage media such as a memory stick and SD memory card, and cable connection for sending down serial signals prescribed by cellular phone carriers.

The user a selects the image data sending means N2 from the items on the menu displayed on the touch panel screen of the portrait seal printing machine 20 (step A5). In response to the selection, the portrait seal printing machine 20 is prepared to receive image data through the image data sending means N2 selected by the user a (step A6).

After that, the cellular phone with camera 10 feeds the portrait seal printing machine 20 with image data (step A7). In the case where the user a has selected a storage medium such as a memory stick or an SD memory card as the image data sending means N2, the user a inserts the storage medium into a storage medium insertion slot (see Fig. 3).

Having received the image data, the portrait seal printing machine 20 displays a service menu on the touch panel screen to let the user a trim the image, draw a design in the image, and so forth (step A8).

The user a follows the service menu to carry out desired operations. After the user a has trimmed the image, drawn a design in the image, made a screen separation, etc. as he/ she prefers, the user a presses or touches an indication (e.g. OK) displayed on the touch panel screen to settle the image (step A9).

The portrait seal printing machine 20 processes the image data according to the operations by the user a, and does printing based on the image data to produce portrait seals (step A10).

After producing the portrait seals, the portrait seal printing machine 20 outputs the portrait seals, and completes the service (step A11).

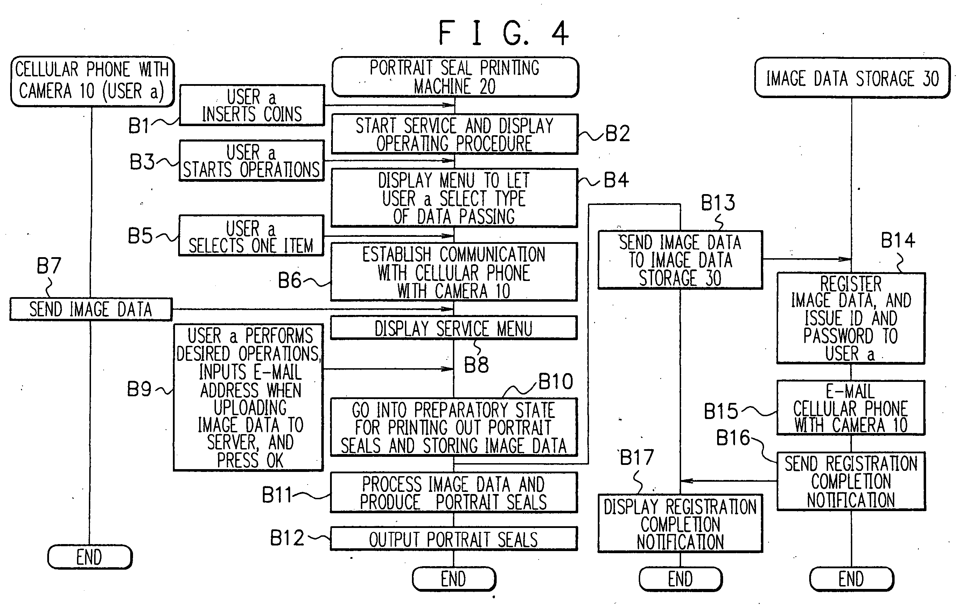

In the following, a description will be made in detail of another example of the operation of the image printing system using a cellular phone with camera in reference to Figs. 1, 3 and 4. Fig. 4 is a chart showing another example of the operation of the image printing system using a cellular phone with camera depicted in Fig. 1. In Fig. 4, steps B1 to B8 are the same as aforementioned steps A1 to A8 shown in Fig. 2, and therefore do not require further explanation.

The user a can register the image data in the image data storage 30 by selecting an option in the service menu displayed on the touch panel screen at step B8.

When the user a resisters the image data in the image data storage 30, the image data storage 30 stores the image data for a certain period of time.

After the user a has finished a series of operations including trimming the image, drawing a design in the image, and making a screen separation as he/ she prefers, the user a selects an option to register the image data in the image data storage 30. In the course of registration, the user a inputs the e-mail address of his/ her cellular phone with camera 10. Having finished a series of operations involved in registration, the user a presses an indication (e.g. OK) displayed on the touch panel screen (step B9).

Subsequently, the portrait seal printing machine 20 goes into preparatory state for printing out portrait seals and registering the image data in the image data storage 30 (step B10).

The portrait seal printing machine 20 prints out portrait seals and registers the image data in the image data storage 30 concurrently. Here, operational steps up to the output of the portrait seals (steps B11 and B12) are the same as aforementioned steps A10 and A11 shown in Fig. 2, and therefore do not require further explanation.

The portrait seal printing machine 20 transmits the image data to the image data storage 30 via the network N1 (step B13).

When receiving the image data from the portrait seal printing machine 20, the image data storage 30 stores the image data in a server. Then, the image data storage 30 issues an ID and a password unique to the user a to authorize him/ her to access the storage 30 (step B14). Accordingly, the user a can access the image data storage 30 via the network N1 to receive various services offered by the image data storage 30. Besides, the user a can delete the image data from the image data storage 30.

The portrait seal printing machine 20 sends data on the logical storage position where the image data is stored, and the ID and password issued at step B 14 to the cellular phone with camera 10 by e-mail (step B15).

After that, the image data storage 30 sends the portrait seal printing machine 20 notification that the image data of the user a has been stored on the server, that the ID and password have been issued, and that information on the logical storage position, ID and password has been e-mailed to the cellular phone with camera 10. The notification is transmitted to the portrait seal printing machine 20 as registration completion notification via the network N1 (step B16).

Having received the registration completion notification sent at step B16, the portrait seal printing machine 20 displays information that the image data has been stored in the server, that the ID and password unique to the user a have been issued, and that information on the logical storage position, ID and password has been sent to the cellular phone with camera 10 on the touch panel screen (step B17).

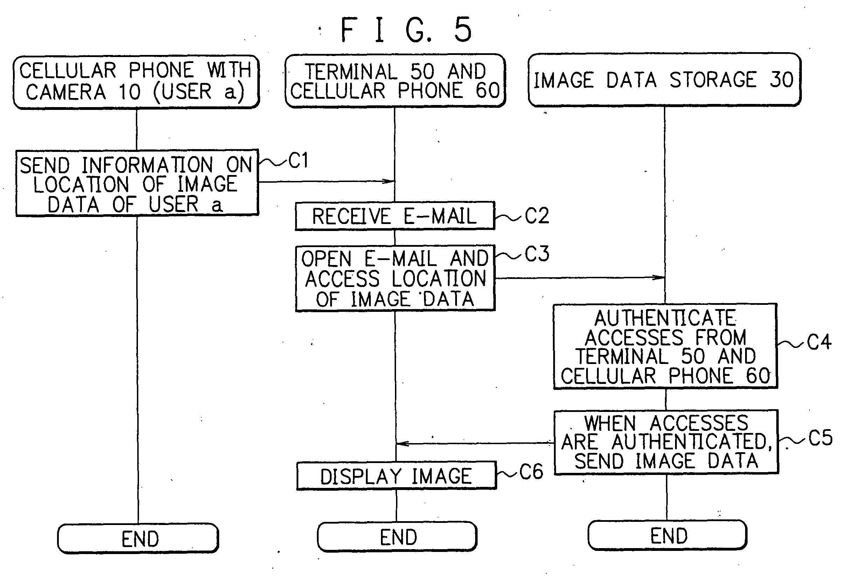

In the following, a description will be made in detail of yet another example of the operation of the image printing system using a cellular phone with camera with reference to Figs. 1, 3 and 5. Fig. 5 is a chart showing another example of the operation of the image printing system using a cellular phone with camera depicted in Fig. 1. In Fig. 5, there is illustrated the operation on the occasion when the user a has the user b and user c look at the image of the user a stored in the image data storage 30.

First, the user a sends e-mail to let the users b and c know the location of the image data (logical storage position where the image data is stored) from the cellular phone with camera 10 to the terminal 50 of the user b and the cellular phone 60 of the user c via the network N1.(step C1).

The terminal 50 and the cellular phone 60 receive the e-mail sent from the cellular phone with camera 10 via the network N1 (step C2).

The users b and c open the e-mail sent from the cellular phone with camera 10 on the terminal 50 and the cellular phone 60, respectively, and access the location of the image data of the user a on the server via the network N1 based on the information in the e-mail through the predetermined procedure (step C3).

The image data storage 30 conducts authentication of accesses from the terminal 50 and the cellular phone 60 (step C4).

When the accesses are authenticated, the image data storage 30 sends the image data to the terminal 50 and the cellular phone 60 (step C5).

Having received the image data sent from the image data storage 30, the terminal 50 and the cellular phone 60 display the image data on their screens (step C6).

In the following, a description will be given of an image printing system using a cellular phone with camera according to the second embodiment of the present invention.

In the second embodiment, the image printing system using a cellular phone with camera provides point service in cooperation with a company. Through the point service, each user has a point reward for purchasing a product sold by the company or the like, and he/ she can use the obtained points to enjoy the service.

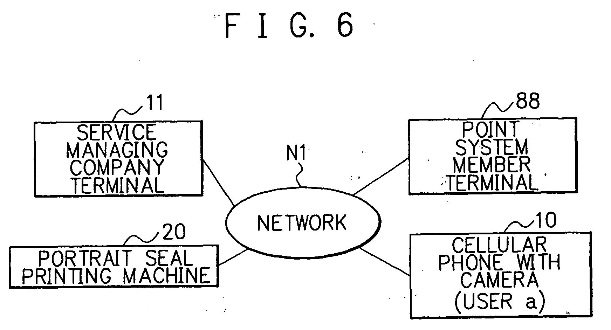

Fig. 6 is a block diagram showing the configuration of an image printing system using a cellular phone with camera according to the second embodiment of the present invention.

Referring to Fig. 6, the image printing system using a cellular phone with camera of the second embodiment comprises a cellular phone with camera 10 of a user a, a portrait seal printing machine 20, a service managing company terminal 11, a point system member terminal 88, and a network N1.

The service managing company terminal 11 and the point system member terminal 88 is information processing equipment such as a workstation server connected to the network N1.

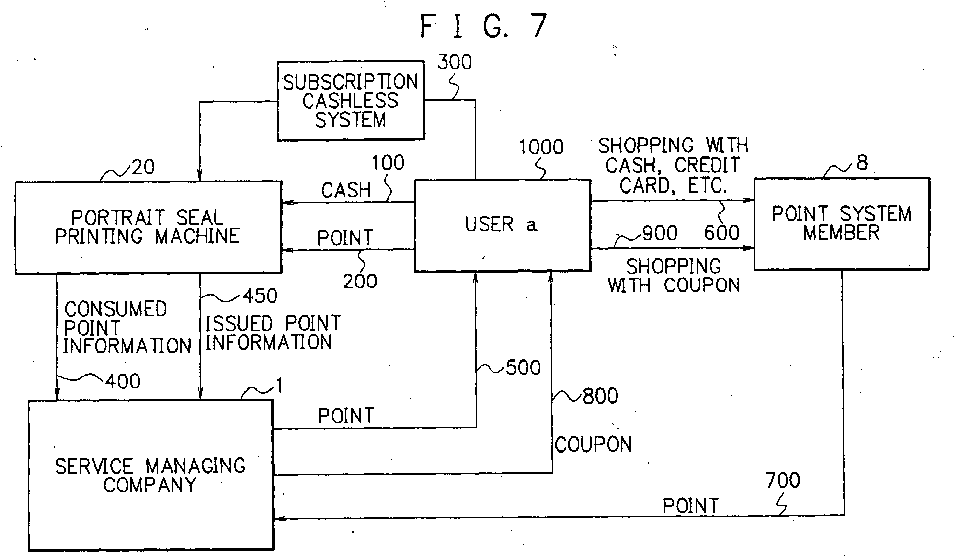

Fig. 7 is a correlation diagram of point use showing the flow of points in the image printing system using a cellular phone with camera depicted in Fig. 6.

As can be seen in Fig. 7, in the second embodiment, points are passed among a service managing company 1, a point system member 8, a user a1000, and the portrait seal printing machine 20.

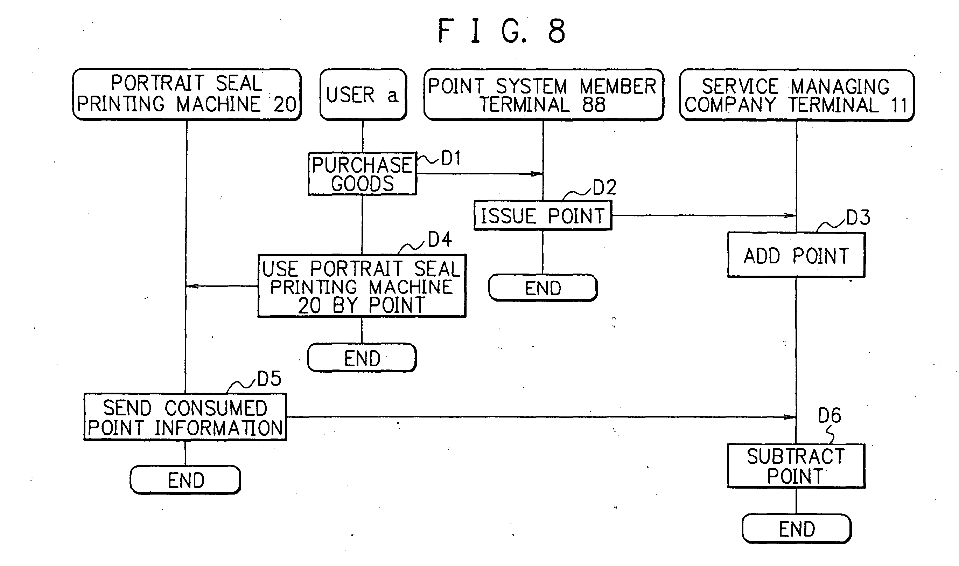

In the beginning, a description will be given of a case where the user a uses points to receive the service, namely, to send image data from the cellular phone with camera 10 to the portrait seal printing machine 20 and produce portrait seals. Fig. 8 is a chart showing an example of the operation of the image printing system using a cellular phone with camera depicted in Fig. 6 for receiving its service by utilizing points.

First, the user a purchases goods offered by the point system member 8 such as a cellular phone provider (step D1). The point system member terminal 88 issues the user a with points, for example, in proportion to the amount of the payment for the goods, and sends information on the points issued to the user a (point information 700) to the service managing company terminal 11 via the network N1 (step D2).

Having received the point information 700 from the point system member terminal 88, the service managing company terminal 11 adds the points to user a's point account or record on its database according to the point information 700, thereby updating the database (step D3).

When the user a has saved enough points to receive the service, the user a connects his/ her cellular phone with camera 10 to the portrait seal printing machine 20, and enjoys the service by using points 200 as shown in Fig. 7 (step D4).

After that, the portrait seal printing machine 20 sends information as to the points 200 consumed by the user a for receiving the service (consumed point information 400) to the service managing company terminal 11 via the network N1 (step D5).

When receiving the consumed point information 400 from the portrait seal printing machine 20, the service managing company terminal 11 takes the points 200 from user a's point account on its database according to the consumed point information 400, thereby updating the database (step D6).

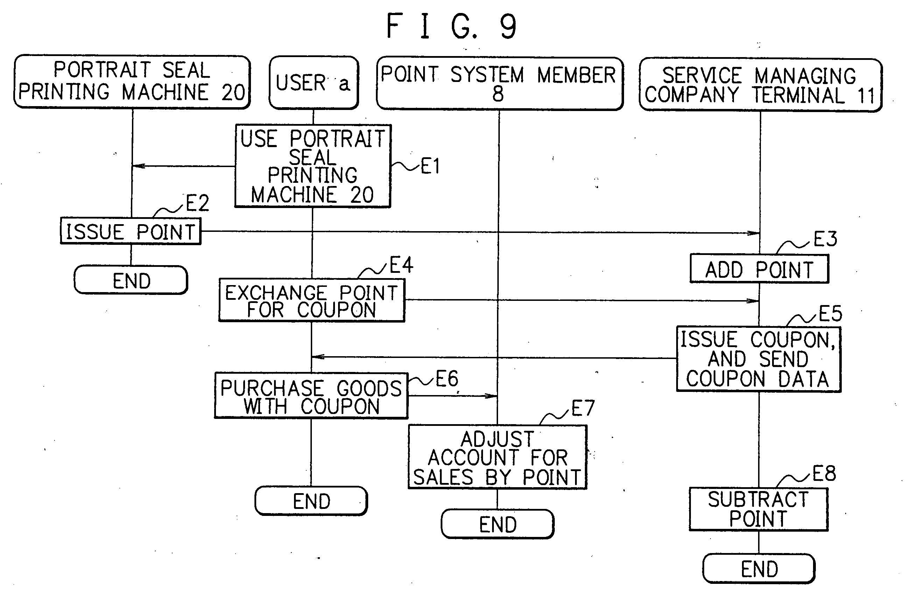

Fig. 9 is a chart showing another example of the operation of the image printing system using a cellular phone with camera depicted in Fig. 6 for utilizing its service in cash or through a subscription cashless system. In this case, users obtain some points by utilizing the service through the portrait seal printing machine 20.

Referring to Figs. 7 and 9, the user a first uses the portrait seal printing machine 20 in cash 100 or through a subscription cashless system 300 (step E1).

Subsequently, the portrait seal printing machine 20 issues the user a with points according to the service utilized by the user a, and sends information on the issued points (issued point information 450) to the service managing company terminal 11 via the network N1 (step E2).

Having received the issued point information 450, the service managing company terminal 11 adds the points to user a's point account or record in its database on the basis of the issued point information 450, thereby updating the database (step E3).

The user a sends an inquiry about his/ her points from the cellular phone with camera 10 to the service managing company terminal 11 via the network N1, and receives a point notification 500. When the user a has racked up points that can be exchanged for a coupon, he/ she decides to have the coupon (step E4).

In response to a request from the user a, the service managing company terminal 11 exchanges the points for the coupon, and sends coupon data 800 to the cellular phone with camera 10 (step E5).

The user a purchases goods offered by the point system member 8 with the coupon sent from the service managing company terminal 11 (step E6). On the other hand, the point system member- 8 adjusts an account for the sales by the points (step E7).

Besides, when issuing a coupon, the service managing company terminal 11 takes the points from user a's point account in its database, thereby updating the database (step E8).

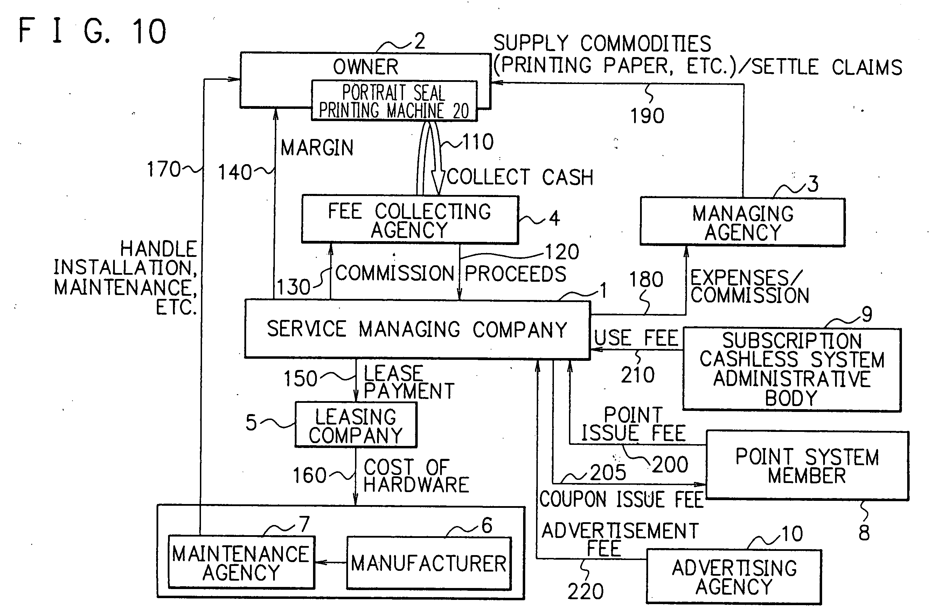

Fig. 10 is a block diagram showing an example of corporate structure adopting an image printing system using a cellular phone with camera of the present invention.

Referring to Fig. 10, the business concerning the image printing system involves a service managing company 1, a owner 2 of the portrait seal printing machine 20, a managing agency 3, a fee collecting agency 4, a leasing company 5, a manufacturer 6 of the printing machine 20, a maintenance agency 7, a point system member 8, a subscription cashless system administrative body 9, and an advertising agency 10.

The managing agency 3, for example, supplies commodities or articles such as printing paper consumed by the portrait seal printing machine 20, and settles users' claims against the printing machine 20. The fee collecting agency 4 collects cash put in the portrait seal printing machine 20. The leasing company 5 holds the lease on the portrait seal printing machine 20. The maintenance agency 7 handles installation of the portrait seal printing machine 20, and makes maintenance, repair or the like. The advertising agency 10 receives commissions for advertising from advertisers (not shown), and puts an advertisement in a corner or the back of photographic printing paper or a portrait seal produced by the portrait seal printing machine 20 or displaying advertisements on the touch panel screen of the printing machine 20.

In this example, the advertising agency 10 pays a percentage of advertising revenues or an agency commission (advertisement fee 220) to the service managing company 1. With regard to the advertisements displayed on the touch panel screen of the portrait seal printing machine 20, it is possible to put on a movie display through the network N1. Besides, the contents of the advertisements can be changed arbitrarily from, for example, the service managing company terminal 11 via the network N1, and also can be changed automatically under procedures programmed in advance.

As set forth hereinabove, in accordance with the present invention, there is provided an image printing system using a cellular phone with camera, which offers useful services for a user who possesses a cellular phone with camera but does not have means for easily printing out images taken by the cellular phone.

Moreover, in accordance with the present invention, a user can not just easily print out images taken by a cellular phone with camera, but also make the images into portrait seals. In this manner, the image printing system using a cellular phone with camera adds an element of fun to its service, thus enabling the revitalization of the cellular phone market.

## Claims

1. An image printing system using a cellular phone with camera including a means for connecting a cellular phone with camera to an portrait seal printing machine, wherein:
image data of an image taken by the cellular phone with camera is fed into the portrait seal printing machine; and
the portrait seal printing machine produces and prints out portrait seals based on the image data.

2. An image printing system using a cellular phone with camera including a means for connecting a cellular phone with camera to an portrait seal printing machine, wherein:
image data of an image taken by the cellular phone with camera is fed into the portrait seal printing machine;
the portrait seal printing machine has a coin slot; and
the portrait seal printing machine produces and prints out portrait seals based on the image data when a predetermined amount of coins are inserted into the coin slot.

3. An image printing system using a cellular phone with camera including a means for connecting a cellular phone with camera to an portrait seal printing machine, wherein:
image data of an image taken by the cellular phone with camera is fed into the portrait seal printing machine;
the portrait seal printing machine produces and prints out portrait seals based on the image data;
the portrait seal printing machine is connected to a prescribed network; and
a maintenance control terminal does maintenance on the portrait seal printing machine via the network.

4. An image printing system using a cellular phone with camera including a means for connecting a cellular phone with camera to an portrait seal printing machine, wherein:
image data of an image taken by the cellular phone with camera is fed into the portrait seal printing machine;
the portrait seal printing machine has a coin slot;
the portrait seal printing machine produces and prints out portrait seals based on the image data when a predetermined amount of coins are inserted into the coin slot;
the portrait seal printing machine is connected to a prescribed network; and
a maintenance control terminal does maintenance on the portrait seal printing machine via the network.

5. An image printing system using a cellular phone with camera including a means for connecting a cellular phone with camera to an portrait seal printing machine, wherein:
image data of an image taken by the cellular phone with camera is fed into the portrait seal printing machine;
the portrait seal printing machine produces and prints out portrait seals based on the image data;
the portrait seal printing machine is connected to a prescribed network;
a maintenance control terminal does maintenance on the portrait seal printing machine via the network; and
maintenance work includes upgrading of a version of software running on the portrait seal printing machine, power ON/ OFF setting for the portrait seal printing machine, and/ or monitoring of the portrait seal printing machine for failures.

6. An image printing system using a cellular phone with camera including a means for connecting a cellular phone with camera to an portrait seat printing machine, wherein:
image data of an image taken by the cellular phone with camera is fed into the portrait seal printing machine;
the portrait seal printing machine has a coin slot;
the portrait seal printing machine produces and prints out portrait seals based on the image data when a predetermined amount of coins are inserted into the coin slot;
the portrait seal printing machine is connected to a prescribed network;
a maintenance control terminal does maintenance on the portrait seal printing machine via the network; and
maintenance work includes upgrading of a version of software running on the portrait seal printing machine, power ON/ OFF setting for the portrait seal printing machine, and/ or monitoring of the portrait seal printing machine for failures.

7. An image printing system using a cellular phone with camera, which includes a means for connecting a cellular phone with camera to an portrait seal printing machine and adopts a point system so that users can use the portrait seal printing machine with their points, wherein:
image data of an image taken by the cellular phone with camera is fed into the portrait seal printing machine; and
the portrait seal printing machine produces and prints out portrait seals based on the image data by subtracting predetermined points from user's point account.

8. An image printing system using a cellular phone with camera, which includes a means for connecting a cellular phone with camera to an portrait seal printing machine and adopts a point system so that users can use the portrait seal printing machine with their points, wherein:
image data of an image taken by the cellular phone with camera is fed into the portrait seal printing machine;
the portrait seal printing machine has a coin slot; and
the portrait seal printing machine produces and prints out portrait seals based on the image data when a predetermined amount of coins are inserted into the coin slot or by subtracting predetermined points from user's point account.

9. An image printing system using a cellular phone with camera, which includes a means for connecting a cellular phone with camera to an portrait seal printing machine and adopts a point system so that users can use the portrait seal printing machine with their points, wherein:
image data of an image taken by the cellular phone with camera is fed into the portrait seal printing machine;
the portrait seal printing machine produces and prints out portrait seals based on the image data by subtracting predetermined points from user's point account;
the portrait seal printing machine is connected to a prescribed network; and
a maintenance control terminal does maintenance on the portrait seal printing machine via the network.

10. An image printing system using a cellular phone with camera, which includes a means for connecting a cellular phone with camera to an portrait seal printing machine and adopts a point system so that users can use the portrait seal printing machine with their points, wherein:
image data of an image taken by the cellular phone with camera is fed into the portrait seal printing machine;
the portrait seal printing machine has a coin slot;
the portrait seal printing machine produces and prints out portrait seals based on the image data when a predetermined amount of coins are inserted into the coin slot or by subtracting predetermined points from user's point account;
the portrait seal printing machine is connected to a prescribed network; and
a maintenance control terminal does maintenance on the portrait seal printing machine via the network.

11. An image printing system using a cellular phone with camera, which includes a means for connecting a cellular phone with camera to an portrait seal printing machine and adopts a point system so that users can use the portrait seal printing machine with their points, wherein:
image data of an image taken by the cellular phone with camera is fed into the portrait seal printing machine;
the portrait seal printing machine produces and prints out portrait seals based on the image data by subtracting predetermined points from user's point account;
the portrait seal printing machine is connected to a prescribed network;
a maintenance control terminal does maintenance on the portrait seal printing machine via the network; and
maintenance work includes upgrading of a version of software running on the portrait seal printing machine, power ON/ OFF setting for the portrait seal printing machine, and/ or monitoring of the portrait seal printing machine for failures.

12. An image printing system using a cellular phone with camera, which includes a means for connecting a cellular phone with camera to an portrait seal printing machine and adopts a point system so that users can use the portrait seal printing machine with their points, wherein:
image data of an image taken by the cellular phone with camera is fed into the portrait seal printing machine;
the portrait seal printing machine has a coin slot;
the portrait seal printing machine produces and prints out portrait seals based on the image data when a predetermined amount of coins are inserted into the coin slot or by subtracting predetermined points from user's point account;
the portrait seal printing machine is connected to a prescribed network;
a maintenance control terminal does maintenance on the portrait seal printing machine via the network; and
maintenance work includes upgrading of a version of software running on the portrait seal printing machine, power ON/ OFF setting for the portrait seal printing machine, and/ or monitoring of the portrait seal printing machine for failures.

13. The system as claimed in anyone of claims 1 to 12, wherein:
the portrait seal printing machine has a touch panel screen; and
one or more advertisements are put in a part of the portrait seals output from the portrait seal printing machine and/ or displayed on the touch panel screen.

14. The system claimed in anyone of claims 1 to 13, further including an image data storage for storing the image data.
